# EUROPEAN PATENT APPLICATION

(11) **EP 2 869 473 A1**
(43) Date of publication of application: **06.05.2015**
(21) Application number: 14181508.4
(22) Date of filing: 20.08.2014
(51) Int. Cl.: H04B 1/38, G06F 1/16

(54) **Protective device for a mobile electronic apparatus**

(30) Priority: 27.08.2013 IT PI20130075
(71) Applicant: Canzano, Sandro, 66016 Guardiagrele (CH) (IT)
(72) Inventor: Canzano, Sandro, 66016 Guardiagrele (CH) (IT)
(74) Representative: Romano, Giuseppe

(57) **Abstract**

A protection device (40) for a mobile electronic apparatus (12), such as a tablet or a cellular phone, or a smartphone etc., wherein a stiff support structure (41) comprises a barrier portion (22) with two substantially parallel inner face (23') and outer face (23"), and coupling means (24) for mounting the device (40) with the inner and outer face closer and more distant from the side to be protected (13) of the apparatus (12). In the barrier portion (22) a magnetic material (30) is incorporated, preferably englobed, i.e. embedded, for creating a magnetic field with predetermined intensity proximate to the outer face (23") in order to keep the apparatus (12) with the protection device (40) on a magnetically sensitive body with a predetermined force. According to the invention, a magnetically shielding element (32) is provided, arranged upon use between the magnetic material (30) and the apparatus (12) and apt to lower the magnetic field at the side to be protected (13) at a predetermined maximum value, by shielding the apparatus (12). The invention guarantees both a high level of defencing from impacts, and it allows the user to position steadily the protected apparatus (12) on any metallic surface sensible to the magnets, having any tilting. The protection with structure made of plastic can be made by means of injection moulding process allowing to embed the shielding, and in case the magnets if implemented in distinct phase inside the stiff structure.

## Description

### Field of application

The present invention relates to a device for protecting mobile electronic apparatuses such as smartphone, tablet or cellular phones, from mechanical stresses such as impacts and compression actions, said device having a magnetic portion to keep the apparatus on a surface comprising a magnetic metal.

### Brief explanations of prior art - technical problems

With the spread of the cellular phones and more recently of the cellular phones of advanced type, often designated as "smartphone", several devices have been proposed on the market to cover and protect the surfaces of such apparatuses. In particular the rear protection, often designated as "cover", is a covering system of smartphones, tablets as well as cellular phones against scratches, powder, humidity and accidental falls. In order to obtain such protection, commonly one has recourse to a kind of protective shell, made of a stiff or soft material, the inner surface thereof is fastened to the rear portion of the apparatus and it is coupled thanks to the geometrical interference between the two elements, whereas the outer surface remains at view and it is subjected to the mechanical action of impacts or other agents, by avoiding that the protected apparatus is damaged. The geometrical interference has a limited extent, so that the user can easily assemble and disassemble the protection device on/from the phone as wished.

Protection devices are also known, further equipped with a magnetic portion to fasten the apparatus in a removable way on a surface comprising a magnetic material. Such protection devices comprises several elements coupled therebetween in layers, in particular the means for the magnetic fastening forms an intermediate layer of the protection device. Such solution allows positioning the protected apparatus on metallic surfaces made of materials sensible to the magnets, in particular, on tilted or vertical surfaces. Currently, such solutions is however implemented only for flexible and soft-to-the-touch protection elements, for example for protection elements made of textile material or leather. However, in this way it is no more possible protecting the apparatus from compression, which can cause the apparatus squashing, nor from point elements/objects which could scratch the apparatus body.

From CN202739082U a protective jacket for a cellular phone, a tablet or analogous apparatus is known. Outside the outer surface of the jacket, a plurality of magnets is provided to fix the phone on a metallic surface in a removable way. In such device the magnets, being positioned outside, are directly subjected to impacts and other mechanical actions and then they can break, as the magnetic materials usually are fragile.

Furthermore, in the devices of known technique, the magnets must be selected such that the magnetic field generated therefrom does not disturb in an unacceptable way the apparatus operation .The use of relatively weak magnets limits the magnetic interactions which the protection devices are able to establish with the metallic surfaces.

For this reason, the protection devices equipped with magnets, according to the known art, do not guarantee an adequate level of stability against the most intense mechanical actions, such as for example those acting on a vehicle running on an uneven ground.

For the same reason, still in case of using a vehicle, it is very difficult acting on the keys of a protected apparatus without this moves, notwithstanding the magnets, and therefore without it is necessary to remove the apparatus from the metallic surface.

Therefore, the need is felt for a device for protecting a mobile electronic apparatus , such as for example a telecommunication apparatus such as a cellular phone, a smartphone, a tablet, or even an apparatus for reproducing sounds such as a MP3 device, from the impacts and other mechanical actions, allowing to fix the apparatus steadily but removably on a however tilted metallic surface. In particular, the need is felt for such protection device allowing to keep the apparatus on a surface inside a vehicle even in case of considerable stresses, such as those arising during running on an uneven ground. In particular, the need is felt for such device allowing to act on the protected electronic apparatus, fixed on a metallic surface, without having to keep it still with a hand.

### Summary of the invention

The object of the present invention is then to provide a device for protecting a mobile electronic apparatus, such as for example a telecommunication apparatus such as a cellular phone, a smartphone, a tablet, or even an apparatus for reproducing sounds such as a MP3 device, from the mechanical actions, in particular impacts allowing to make the apparatus to adhere magnetically on a metallic surface however tilted in a more stable way with respect to what allowed by the devices of prior art.

A particular object of the invention is to provide such device allowing to use magnets with high capability, to create the magnetic adhesion, without disturbing the usual operation of the apparatus.

Another particular object of the invention is to provide such apparatus allowing to protect such magnets from impacts and other stresses, and allowing then to use magnets implemented with materials having fragile rupture.

These and other objects are reached by a protection device for a mobile electronic apparatus comprising:
- a rigid support structure, comprising:
   - a barrier portion that has two faces extending along predetermined surfaces, substantially parallel to each other, in particular along substantially plane surfaces, and
   - coupling means for steadily mounding the structure to the mobile electronic apparatus on a side to be protected of the mobile electronic apparatus, with an inner face of the two faces of the barrier portion closer to the side to be protected and an outer face more distant from the side to be protected of the apparatus;
- a magnetic material incorporated in the barrier portion, the magnetic material arranged for creating a magnetic field that has a predetermined intensity proximate to the outer face of the barrier portion such that, by arranging the protection device mounted to the mobile electronic apparatus with the outer face on a magnetically sensitive body, the mobile electronic apparatus together with the protection device are stuck to the magnetically sensible body by a predetermined force.
According to the invention, the protection device comprises a magnetically shielding element, in particular made in a diamagnetic material, arranged on the opposite side of the outer face of the barrier portion with respect to the magnetic material and configured in such a way that, upon use, the magnetic field, at the side to be protected of the mobile electronic apparatus, an intensity lower than a maximum predetermined value, in particular a value designated by the manufacturer of the protected apparatus as a maximum value in order not to have troubles.

The protection device according to the invention, in the essential form thereof, is then constituted by a stiff structure, made of plastic or metal, acting as support and which is fastened, for example by geometrical interference, on the boundary surface of the protected apparatus, and by a magnetic material arranged inside the structure, to allow anchoring the protected apparatus on a metallic surface, and by a magnetically shielding element which, upon use, is arranged between the magnetic material and the protected apparatus, to avoid that the magnetic field created by the magnet disturbs the normal operation of the apparatus or even damages it.

The protection device allows protecting first of all the rear side of an apparatus such as a cellular phone, a smartphone or a tablet, that is with the side opposite to the side which usually exposes the user interface of the apparatus, that is a keyboard and/or a conventional screen or touch-screen. In this way a high level of defence against impacts, compression actions is obtained, as well as against point objects which could scratch the body of the apparatus.

At the same time, the magnetically shielding element allows shielding protected apparatus from the magnetic field created by the magnet. This allows using magnets with high power, without the generated magnetic field damages or disturbs the normal operation of the protected apparatus.

For example, the shielding element can be made of a metal having a high magnetic permeability, and then having great shielding properties against the magnetic fields, for example a Nickel-Iron-Molybdenum or Nickel-Iron-Chromium alloy such as Mu-metal (with approximate composition of 77% Ni, 16% Fe, 5% and 2% Cr or Mo), iron, low-alloy steels or other magnetically shielding alloy suitable to implement magnetically shielding sheets. Alternatively, or additionally, the shielding element can be made of a diamagnetic material.

For example, the magnetic material can comprise Neodymium, Samarium-cobalt (SmCo₅), Ferrite, Plastoferrite, plastoneodymium or a combination of such materials. In particular, the magnets containing Neodymium and/or Samarium-cobalt are able to provide particularly intense magnetic fields, so as to allow an effective magnetic adhesion on metallic surfaces able to interact with the magnets, even of apparatuses with considerable weight, for example tablets, for example on vertical surfaces and/or in presence of impulsive stresses, vibrations and still others.

The use of magnets with high power allows anchoring reversibly the apparatus on any surface comprising a metal sensible to the magnets, and having any tilting, such that the apparatus remains in its position even in case of impact and other mechanical actions of considerable entity, as it happens for example in case of a vehicle running on an uneven ground.

Furthermore, the use of magnets with high power allows a considerable use practicality since a user can act on the keys of the apparatus, magnetically anchored on a surface, without keeping the apparatus or even removing it from the resting surface, by using maximum one hand for the necessary time, for example, to establish a connection. This favours a safe use of the apparatus during driving a vehicle, or other activities which do not tolerate distractions and require the continuous use of hands.

The surfaces along thereof the faces of the barrier portion of the supporting structure extend can be plane or substantially plane or curved surfaces so as to adapt to the shape of the side to be protected of the apparatus.

In an embodiment, the magnetic material comprises a magnetic element arranged incorporated in a housing made in the barrier portion. For example, the magnetic element can have a foil-like shape and can be arranged in a housing having preferably corresponding shape.

The magnetically shielding element can be arranged adjacent to the magnet, inside the housing. For example, several magnetic foil-like elements can be provided, together with respective shielding elements, in respective housings obtained in the barrier portion of the supporting structure.

Advantageously, the magnetic material comprises a magnetic element englobed in the barrier portion, i.e. embedded in the matrix of the barrier portion. In other words, the magnetic element magnet is wholly surrounded with material portions of the barrier portion. In this way, the magnetic element englobed that is embedded in the stiff supporting structure is protected itself by outer actions such as impacts and other ones, and then it can be made in a magnetic material with fragile rupture. Furthermore, the magnetic shielding element further improves the impact absorption, by increasing the tenacity of the supporting structure, in case of a structure made of a plastic material.

In particular, the outer face of the barrier portion can have a projection at the housing(s) of the magnets, in other words the magnet(s), in case together with respective shielding elements, can be housed in such respective projections of the outer face. The projection(s) can be configured to form a friction resting element to rest an apparatus equipped with the protection device, on a resting surface not sensible to the magnet.

In another embodiment, the protection device comprises a plurality of magnetic elements and a foil-like shielding element arranged to shield a region of the barrier portion wherein the plurality of magnetic elements is arranged. For example, the foil-like shielding element can form a closing element of one or more housings of the magnetic elements, obtained in the supporting structure and opened on the side of the inner face of the barrier portion. Such embodiment has the advantage of a more effective shielding of the contributions of magnetic field produced by single magnets, as it limits the edge effects, i.e. the possibility of "drawing" lines of magnetic field proximate to the edges of the single magnetic elements.

In another embodiment, the protection device comprises an additional diamagnetic material element, as for example plastic or teflon, such element is positioned between said magnetic element and said shielding element. The insertion of this diamagnetic material element allows obtaining greater shielding power. Preferably according to this embodiment the diamagnetic material element could be a cylindrical element of a thickness comprised between 0,1 and 3 mm. The shielding element could be for example a foil or insulating lamination made of a shielding material such as for example a Nickel-Iron-Molybdenum alloy such as Mu-metal.

The supporting structure can comprise a cavity with substantially polyhedral shape, wherein the barrier portion is a central barrier portion that extends along a front face of the substantially polyhedral cavity. In particular, a boundary barrier or edge portion is provided that extends along a plurality of side faces of the polyhedral cavity. In this way, an effective protection even of the boundary or edge portions of the apparatus, in case of fall with the substantially perpendicular or slightly tilted plane of the apparatus with respect to the vertical, during the fall to the ground or onto other potentially dangerous surfaces.

Preferably, the coupling means is coupling means selected between positive engagement means and non-positive engagement means, in particular click coupling means or wrapping coupling means, configured for engaging with a polyhedral body of the mobile electronic apparatus, apt to be received in the substantially polyhedral cavity of the protection device, in particular the click coupling means extends along the boundary barrier portion and they are configured for coupling with a boundary portion of the polyhedral body of the apparatus. In this way, the protection device can engage steadily with the protected apparatus, and can be arranged and removed by the user with a simple manoeuvre. The boundary barrier portion is then implemented with portions of adjacent or not adjacent surfaces, extending from the central central barrier portion starting from the respective sides thereof.

The apparatus protected by the protection device, for example a smartphone / cellular phone or tablet then can have a substantially polyhedral shape. Furthermore, the boundary barrier portion can be shaped to receive a protection device equipped with sharp edges or rounded sharp edges.

The supporting structure can be made of a polymeric material, advantageously a tecnopolymer, i.e. a material having high mechanical performances, in particular, with respect to compression and impact stresses. In particular, such polymeric material can be a thermoplastic material, for example ABS, a silicone material, a urethane material, and still other ones.

Advantageously, the thermoplastic material therewith the supporting structure is formed can comprise a phosphorescent material, in particular under the dispersed form in the plastic matrix of the supporting structure. This allows extending the advantages of use practicality of the device according to the invention even to the use under obscurity conditions.

Alternatively, the supporting structure can be made in a non-magnetic material, in particular a material or an alloy, preferably a light alloy, for example an aluminium alloy.

In an embodiment, the magnetic material is dispersed in the polymeric matrix of the supporting structure.

Preferably, the supporting structure is made of a material known as magnetic plastic, for example selected among plastoferrite, and plastoneodymium, or a combination thereof, the magnetic portion thereof provides the magnetic material for anchoring on metallic surfaces able to interact with the magnets.

The objects mentioned above are also reached by a method for constructing a protection device comprising:
- a rigid support structure made of a polymeric material, comprising:
   - a barrier portion that has an inner face and an outer face substantially parallel to each other;
   - coupling means for steadily mounting the supporting structure to a side to be protected of the mobile electronic apparatus;
- a magnetic material incorporated in the barrier portion, wherein the magnetic material comprises a magnetic element arranged incorporated in a respective housing made in the barrier portion,
- a magnetically shielding element arranged on the opposite side of the outer face with respect to the magnetic material
said method comprising the steps of:
- prearranging an injection-moulding mould;
- arranging the magnetic element in the mould;
- inserting a quantity of the polymeric material in the mould and moulding of the supporting structure,
wherein, before the step of arranging the magnetic element, a step of arranging a supporting element in the mould is provide, in particular of a clamp support element,
wherein a step is provided, selected between
- prearranging a magnetically shielding element proximate to the magnetic element before the sept of inserting a quantity of the polymeric material;
- applying a magnetically shielding element on the inner face of the barrier portion,
so as to implement the supporting structure comprising a housing for the magnet and in case for the shielding element, and at the same time arranging the magnet and in case the magnetically shielding element, incorporated in the supporting structure, inside such housing.

An additional subject of the present invention is a kit comprising a protection device according to anyone of the herein described embodiments, a magnetically sensible element which can be connected to the magnetic material of the device and coupling means apt to connect said magnetically sensible element to a resting surface not sensible to the magnet.

### Brief description of the drawings

The invention will be illustrated hereinafter with the description of an embodiment thereof, made by way of example and not with limitative purpose, with reference to the enclosed drawings wherein:
- figure 1 is a schematic representation of a protection device according to the invention, comprising a magnetic material in the form of a magnetic element;
- figure 2 is a schematic representation of a protection device according to the invention, comprising a magnetic material distributed in generalized way in the matrix of the supporting structure;
- figure 3 shows a partially sectioned perspective view of a protection device according to an embodiment of the invention, mounted on a cellular phone;
- le figure 4 and 5 show perspective views of the protection device of figure 3;
- figure 6 shows a partially sectioned perspective view of a protection device according to another embodiment of the invention, mounted on a tablet-like apparatus;
- figure 7 shows a perspective view of a protection device according to an additional embodiment of the invention;
- figure 8 shows a perspective view of the protection device of figure 6 or of figure 7.
- figure 9 shows a perspective view of a protection device according to an additional embodiment of the invention;
- figure 10 shows an exploded view of the invention embodiment of figure 9;
- figure 11 shows a cross section of the invention embodiment of figure 9;
- figure 12 shows a perspective view of a kit according to a first embodiment of the invention;
- figure 13 shows some elements of the kit according to the embodiment of figure 12;
- figure 14 shows a perspective view of a kit according to a second embodiment of the invention;
- figure 15 shows some elements of the kit according to the embodiment of figure 14;
- figure 16 shows a perspective view of a kit according to a second embodiment of the invention;
- figure 17 shows some elements of the kit according to the embodiment of figure 14;

### Detailed description of preferred embodiments

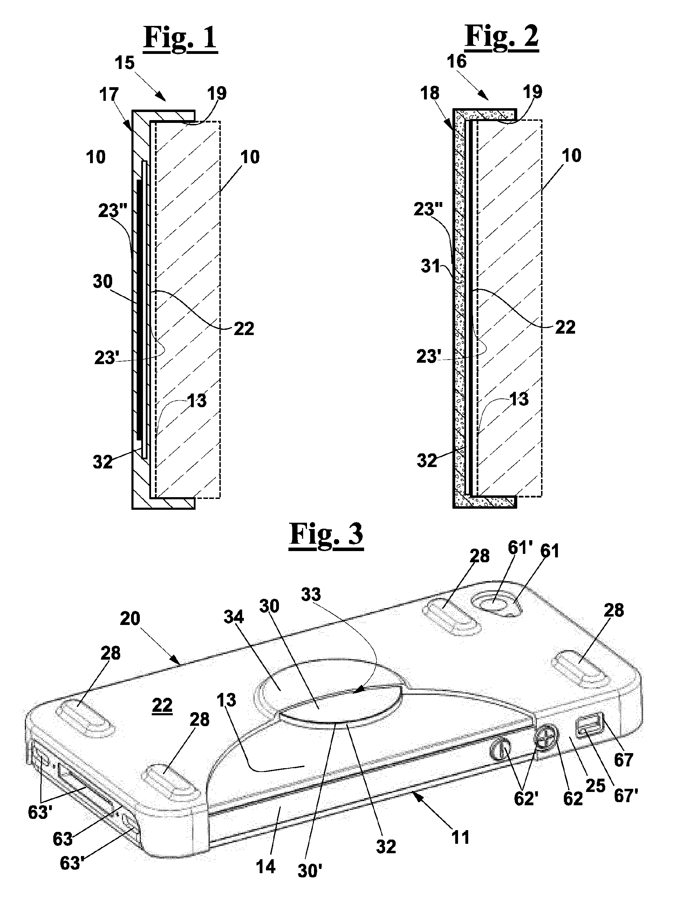

Figure 1 shows a schematic section of a protection device 15 for a mobile electronic apparatus 10 and comprises a stiff support structure 17, typically in a thermoplastic material such as ABS, a silicone material, a urethane material, or in a light alloy, for example, aluminium. The supporting structure 17 comprises a barrier portion 22 with two faces 23',23" extending along predetermined surfaces, substantially parallel to each other, for example substantially plane surfaces, and further comprising coupling means 19 for steadily mounting the device 15 to the apparatus 10 on a side 13 to be protected of the electronic apparatus 10, wherein an inner face 23' is closer and an outer face 23" is more distant from the side 13 to be protected of the apparatus 10. The protection device 15 further comprises a magnetic element 30 englobed in the barrier portion 22, arranged so as to create a magnetic field with predetermined intensity proximate to the outer face 23" of the barrier portion 22.

Furthermore, the device 15 comprises a magnetically shielding element 32, typically made of a diamagnetic material, such as for example a Nickel-Iron-Molybdenum alloy such as Mu-metal, arranged on the opposite side of the outer face 23" with respect to the magnetic element 30, i.e. between this and and the side 13 to be protected of the apparatus 10. In the embodiment of figure 1, even the magnetically shielding element 32 is englobed, i.e. embedded in the barrier portion 22, in other words between the magnetically shielding element 32 and the inner face 23' there is a layer of material of the barrier portion 22. The magnetically shielding element 32 is configured such that, upon use, the magnetic field created by the magnetic element 30, at the side 13 to be protected, has an intensity lower than a maximum predetermined value.

Figure 2 shows a schematic section of a protection device 16 for a mobile electronic apparatus 10 and comprises a stiff support structure 18, comprising a barrier portion 22, analogous to the structure shown in figure 1, as well as coupling means 19 for mounting the device 16 to the apparatus 10 at the side 13. The structure 18 further comprises a magnetic material 31 dispersed in preferably uniform way in the matrix of the structure 18, in particular of the barrier portion 22, so as to create a magnetic field with predetermined intensity proximate to the outer face 23". For example, the structure 18 or the barrier portion 22 can be made of magnetic plastic material, for example a plastoferritic material, plastoferrite and/or plastoneodymium, or a mixture of any plastic material and any permanent magnetic material with high power, by means of a injection moulding process.

Furthermore, the device 16 comprises a magnetically shielding layer 32 arranged on the outer face 23" i.e. between the barrier portion 22 and the side 13 to be protected of the apparatus 10. In the embodiment of figure 2, the magnetically shielding element 32 is arranged on the inner face 23' of the barrier portion 22.

Advantageously, the thermoplastic material therewith the supporting structure 17,18 can be formed can comprise a phosphorescent material, in particular under dispersed form in the plastic matrix of the supporting structure 17,18.

Figure 3 shows, in an axonometric view, a protection device 20, according to an embodiment of the invention, suitable for protecting a mobile phone 11, which is shown mounted together with the protection device 20.

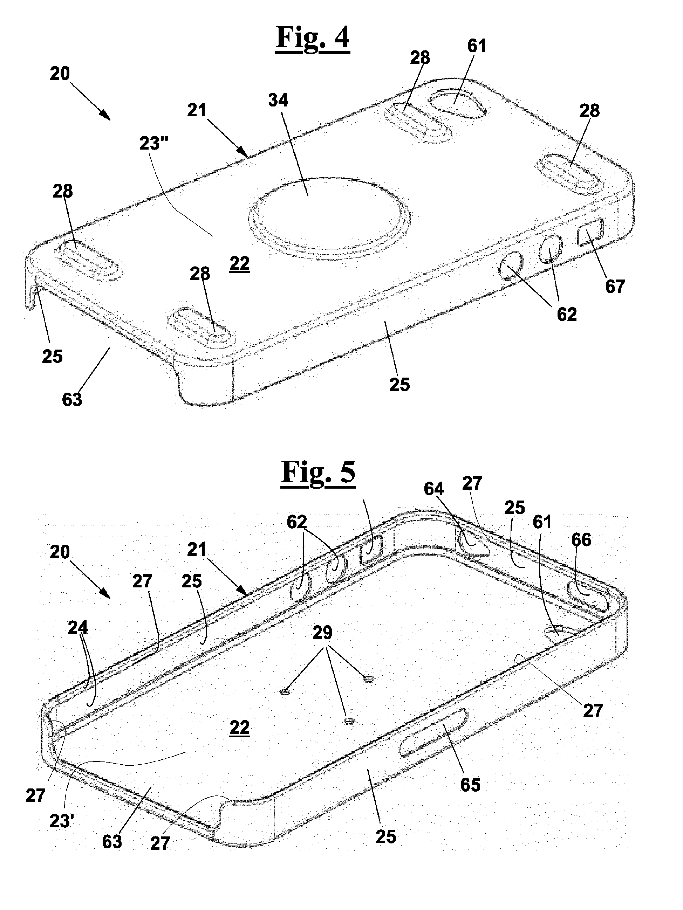

The protection device 20, shown in greater detail in figures 4 and 5, has a support structure 21 suitable for protecting both the rear side 13, exposing an approximatively plane surface, and the edge portion 14 of the cellular phone 11 (figure 3). To this purpose, the structure 21 comprises a central barrier portion 22, having a substantially plane inner surface 23' (figure 5) and an outer surface 23" (figure 4), and a raised boundary barrier portion 25, comprising four side faces extending from respective sides of the central barrier portion 22, forming a structure with a polyhedral cavity, i.e. without a front face, in this case a cavity with parallelepiped shape.

The boundary barrier portion 25 is configured for engaging with the cellular phone 11. In other words, the boundary barrier portion 25 comprises means 27 for coupling with the cellular phone 11, in this case non-positive engagement means 27 associated to snap means (figure 5) wherein a geometrical interference is created between the boundary barrier portion 25 and the edge portion 14 of the mobile phone 11 (figure 3).

In the device 20 shown in figures 3-5, the magnetic element 30 of the protection device 20 has the shape of a magnetic foil. In this case, the magnetic element 30 is housed in a housing 33 (figure 3) made in the supporting structure 21, therefore the magnetic element 30 is englobed, i.e. embedded in the barrier portion 22 of the supporting structure 21. The magnetic element has a lower face 30' more proximate, upon use, to the mobile phone 11.

The protection device 20 further comprises a magnetically shielding element 32. In this case the magnetically shielding element 32 is arranged inside the housing 33, between the magnetic element 30 and, upon use, the cellular phone 11. In figure 5, holes 29 are visible on the inner face 23' of the barrier portion 22, for the passage of supporting elements such as punches of a support for keeping the magnetic element 30, in this case together with the shielding element 32, in a predetermined position during the injection moulding process, corresponding to the housing 33 (figure 3). A surface of the magnetically shielding element 32 covers the inner face of the magnetic element 30', thus implementing the wished shielding effect, so as to protect the phone 14 from the negative effect of the magnetic field.

Such arrangement of the magnetic element 30 and of the magnetically shielding element 32 can be implemented during the process for moulding the supporting structure 21, for example, by means of injection moulding, wherein the magnetic element 30 and the magnetically shielding element 32 is prearranged in the mould. In this case, the magnetically shielding element 32 is arranged between the magnetic element 30 and the inner face 23' of the central barrier portion 22, as shown by figure 5. In other words, similarly to what shown in figure 1, the magnetically shielding element 32 is englobed, i.e. embedded in the barrier portion 22, with a layer of material of the barrier portion 22 between the magnetically shielding element 32 and the inner face 23'.

The magnetically shielding metallic element, embedded inside the plastic structure 21, provides a greater tenacity to the protection device 20, by contributing to the proprieties for absorbing the impact.

Alternatively, in the process of moulding the supporting structure 21 the housing 33 can be made opened on the side of the lower surface 23' and the magnetic element 30 and magnetically shielding element 32 can be arranged in the housing, for example, by means of gluing, a portion of the inner face 23' forms the bottom of the housing 33. Therefore, the magnetic element 30 and magnetically shielding element 32 can be arranged above the barrier portion 22.

Even if in figures 3-5 only one magnetic element is shown arranged centrally with respect to the central barrier portion 22, even the case of a plurality of magnetic elements 30 is in the scope of the invention, arranged in respective housings 33, in regularly distributed or random positions, wherein, for example, the magnetic elements 30 have the shape of pills or magnetic foils or other convenient shapes dispersed or immersed in the matrix of the central barrier portion 22.

As shown in figures 3 and 4, the protection device 20 can have on the rear surface 23", a projection 34 at the hollow housing 33 described above. The outer surface of the projection 34 can have a finishing or a treatment of other type to create a friction with a resting surface not sensible to the magnetic material 30.

The rear surface 23" and the boundary barrier portion 25 comprise openings 61-67 to make accessible elements and controls in case present on the mobile phone. In particular, such openings can be selected between an opening 61 for a lens 61' of a camera and flash, openings 62 for buttons 62' for regulating the loud-speakers' volume, an opening 63 for a connector connecting data and loudspeakers 63', an opening 64 for a hole 64' for connecting the earphones' pin, an opening 65 for a not shown housing of the SIM card of the cellular phone 11, an opening 66 for the not shown stand-by button, an opening 67 for a switch 67' for activating the silence mode. Furthermore, the outer surface 23" have projections 28 acting as resting points, useful when the mobile phone 11 is positioned on any surface, in particular, a resting surface not sensible to the magnetic material 30.

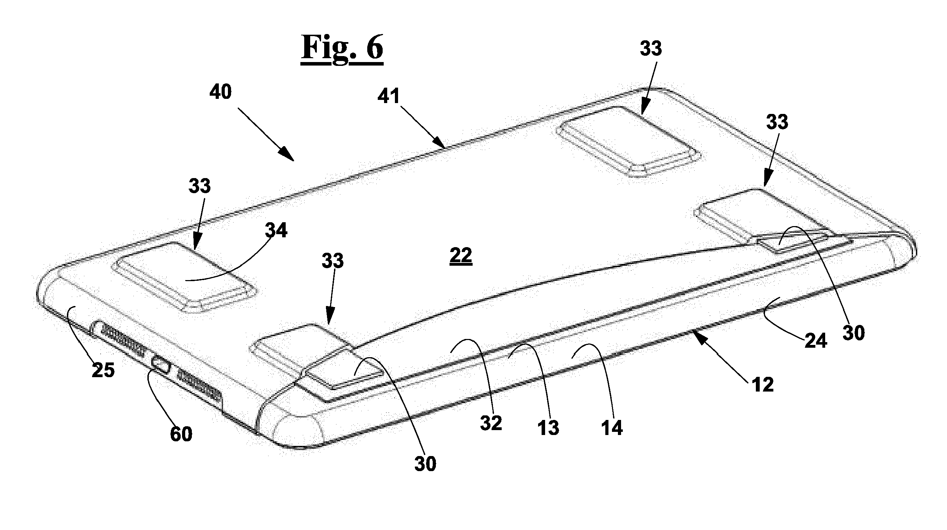

Figure 6 shows, in an axonometric view, a protection device 40, according to another embodiment of the invention, suitable for protecting a tablet-like apparatus 12, which is shown mounted together with the protection device 40. The magnetically shielding element 32 has the shape of a magnetically shielding sheet that extends along a region of the barrier portion 22 surrounding, seen from the side of the inner face 23', the permanent magnets of the housings 33, so as to avoid "drawing" lines of magnetic field and to improve the magnetic shielding.

The protection device 40 further comprises a magnetically shielding element in the shape of a shielding layer 32 arranged to shield the region of the barrier portion 22 wherein the magnetic elements 30 are arranged, for example within a lowered portion of the inner face 23', whereon it can be mounted by gluing. In particular, the magnetically shielding element 32 forms a closing elements of the opened housings 33 of the magnetic elements 30.

In other words, as in the embodiment shown in figure 6, the magnetic element 30 and magnetically shielding element 32 can be arranged above the barrier portion 22 of the supporting structure 41.

Even in the protection device 40, the supporting structure 41 is suitable to protect both the rear side 13 and the edge portion 14, in this case, of the tablet 12. To this purpose, the structure 41 comprises central 22 and boundary 25 barrier portions, analogously to the structure 21 of the protection device 20. The boundary barrier portion 25 can be equipped with positive engagement means 24 of the wrapping type with the edge portion 14 of the tablet 12, for example formed by an elastic portion of the boundary barrier portion 25.

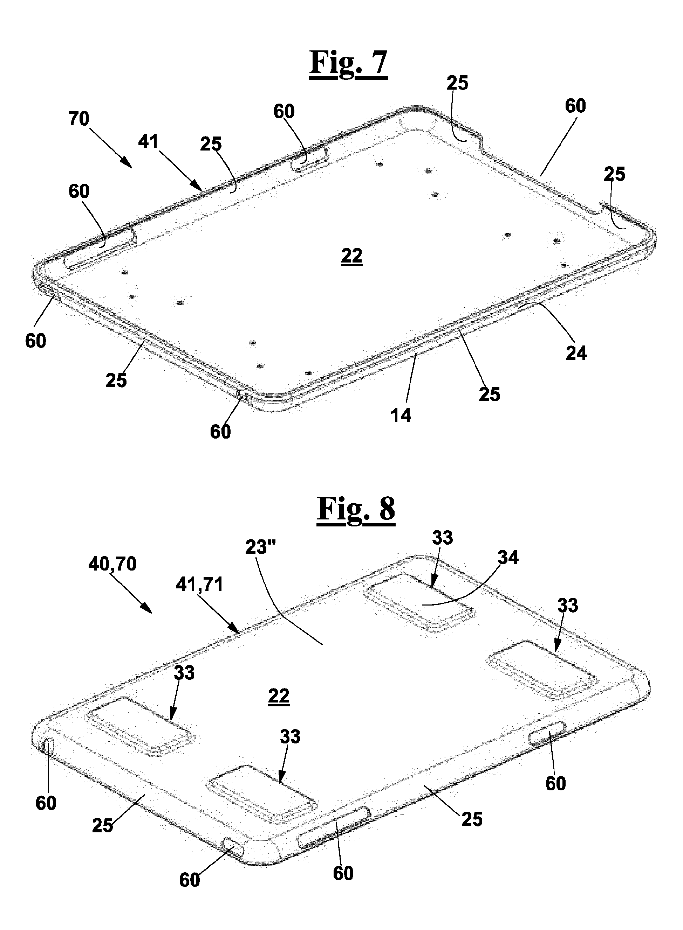

In the device 70 of figures 7 and 8, the magnetic elements 30, shaped like a foil, are englobed, i.e. immersed, in the barrier portion 22. More in details, a plurality of housings 33 is provided, for example proximate to the four angles of the supporting structure 71, housing respective foil-like magnetic elements 30, of the type of figure 6.

In this embodiment, as illustrated in figure 7, the element or the shielding elements 32 are englobed in the supporting structure 61.

Alternatively, as shown in figure 7, it can englobed too, i.e. embedded in the matrix of the barrier portion 22, for example by means of an injection moulding process, with the magnetically shielding element 32 prearranged in the mould before moulding.

Even in the embodiment figures shown in figures 6 and 8, the barrier portion 22 has projections 34 at the housings 33, in case for creating friction with a resting surface not necessarily sensible to the magnetic material 30. Furthermore, the boundary barrier portion 25 comprises openings 60 for making accessible not described elements and controls in case present on the tablet 12.

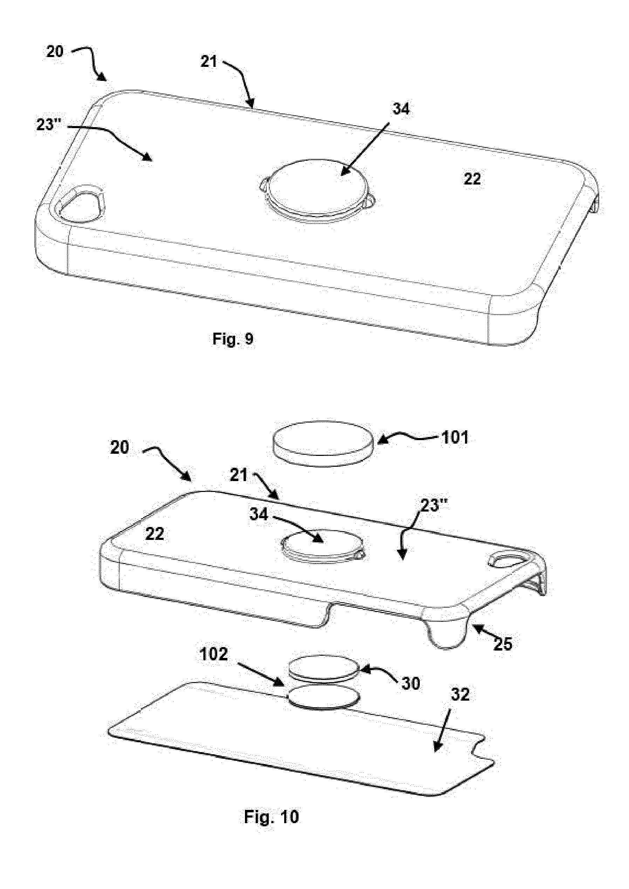

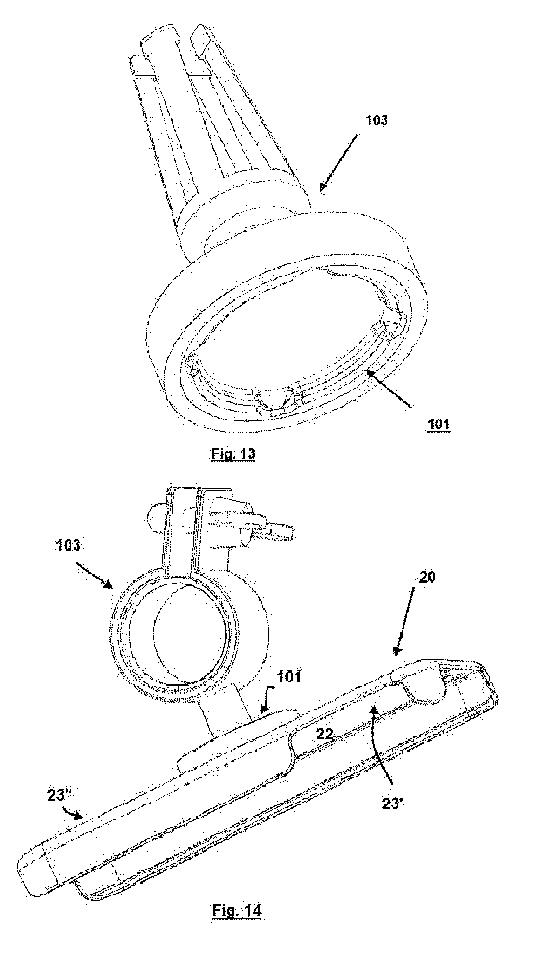

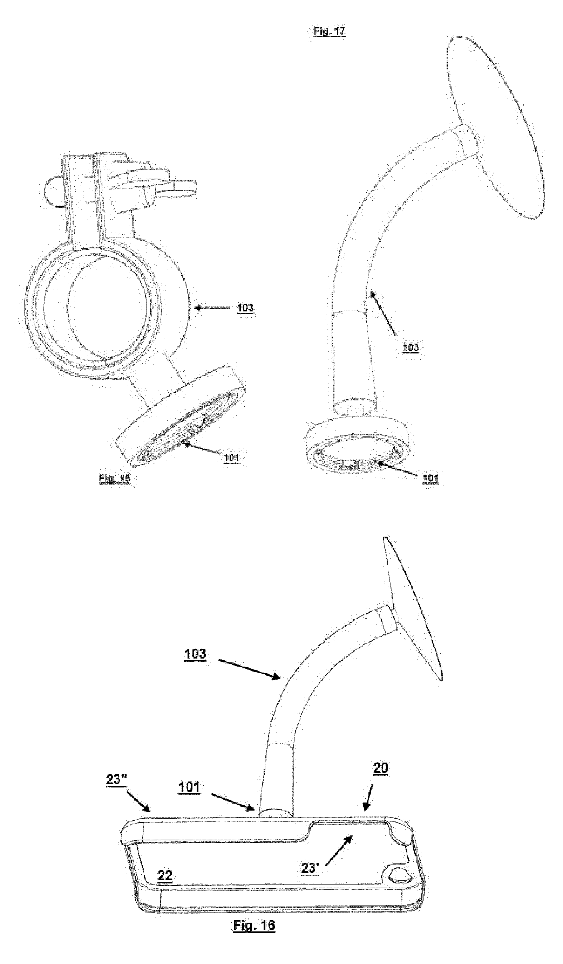

In the embodiment shown in figures 9, 10 and 11 the protection device 20 further comprises a diamagnetic material element 102 positioned between the magnetic material 30 and the magnetically shielding element 32. The magnetically shielding element 32 is constituted by a lamination made of a material with high magnetic permeability selected among a Nickel-Iron-Molybdenum alloy, in particular Mu-metal, iron or a low-alloy steel. As it is visible in figures 9, 10 and 11 the diamagnetic material element 102 is a cylinder with a minimum thickness, wherein a contact surface coincides with the surface of the magnetic material 30 whereas the other surface is in contact with the magnetically shielding element 32. The device di figure 9, 10 and 11 has on the projection 34 two anti-rotating elements placed radially to said projection 34 and apt to connect the device to a magnetic element as the one shown for example in figure 13, 15 and 17, in this way it is possible to make the electronic apparatus to rotate when is used and then to pass from a vertical to a horizontal position.

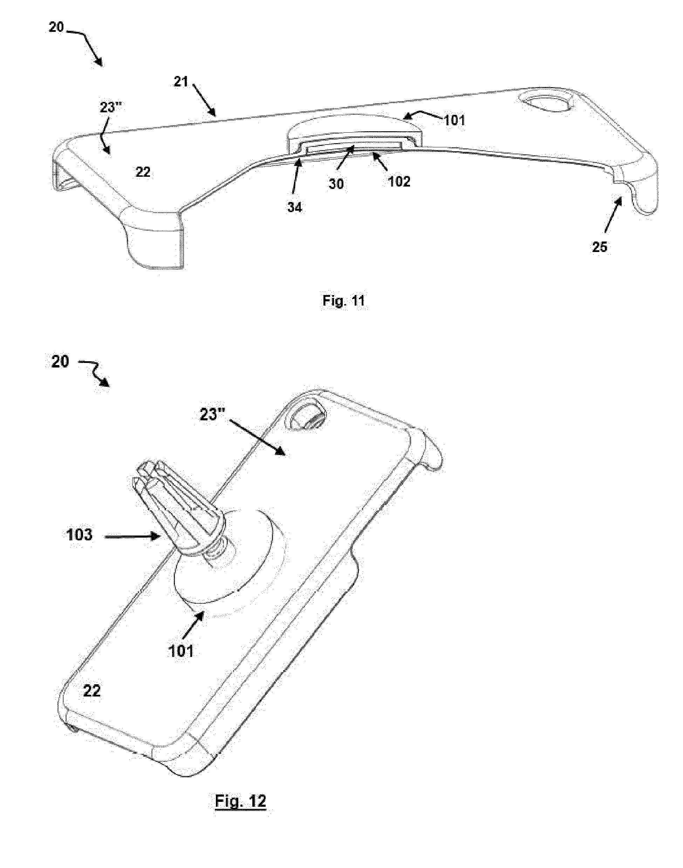

An additional subject of the present invention is a kit for using a mobile electronic apparatus connected to the herein described protection device, on vehicles such as for example cars, bicycles, motorcycles, etc. According to a first embodiment the kit will comprise a protection device 20 according to anyone of the herein described embodiments and a magnetically sensible element 101 which can be connected to the magnetic material 30 of the device. The figures 12-17 relate to some preferred embodiments wherein the magnetically sensible element 101 can be connected to the device both by means of magnetic and mechanical connection, said magnetically sensible element 101 for example could be constituted by a complementary pawl or flange for coupling to a projection 34 or other elements of said projection placed on the surface of the device 20. The kit will further comprise coupling means 103 apt to connect the magnetically sensible element 101 to a not-magnetically sensible surface, such as for example the instrument panel of a car or the handle-bar of a bicycle. Figures 13, 15 and 17 show in detail some coupling means 103 such as for example suction cups suitable to connect the protection device 20, and then the mobile electronic apparatus connected thereto, for example to the instrument panel of a vehicle or to the handle-bar of a bicycle. According to other embodiments other coupling means 103 such as for example bioadhesives, can be selected.

The above description of specific embodiments of the invention, and the use modes thereof, is able to show the invention form the conceptual point of view such that other people, by using the known art, could modify and/or adapt in various applications such specific embodiment without additional searches and without departing from the inventive concept and then it is meant that such adaptations and variations could be considered as equivalent of the specific embodiment. The means and the materials to implement the various described functions could be of various nature, indeed still within the scope of the invention. It is to be meant that the used expressions or the terms are shown by way of description and not with limitative purpose.

## Claims

1. A protection device (15,16,20,40,70) for a mobile electronic apparatus (10,11,12), comprising:
- a support structure (17,18,21,41,71), comprising:
- a barrier portion (22) that has two faces (23',23") extending along predetermined substantially parallel to each other, in particular along substantially plane surfaces, and
- coupling means (19,24,27) for steadily mounding said support structure (17,18,21,41,71) to said mobile electronic apparatus (10,11,12) on a side (13) to be protected of said mobile electronic apparatus (10,11,12), with an inner face (23') of said two faces of said barrier portion (22) closer to said side (13) to be protected and an outer face more distant from said side (13) to be protected of said apparatus (10,11,12);
- a magnetic material (30,31) incorporated in said barrier portion (22), said magnetic material (30,31) arranged for creating a magnetic field that has a predetermined intensity proximate to said outer face (23") of said barrier portion (22) such that, by arranging said protection device (15,16,20,40,70) mounted to said mobile electronic apparatus (10,11,12) with said outer face (23") on a magnetically sensitive body, said mobile electronic apparatus (10,11,12) and said protection device (15,16,20,40,70) are magnetically stuck to said magnetically sensitive body by a predetermined magnetic force.
**characterized in that** said protection device comprises a magnetically shielding element (32) arranged opposite to said outer face (23") with respect to said magnetic material (30,31), said magnetically shielding element (32) configured in such a way that, upon use, said magnetic field, proximate to said outer face (23") of said barrier portion (22), has an intensity lower than a maximum predetermined value, in order to substantially shield said apparatus (10,11,12) from said magnetic field created by said magnetic material (30,31).

2. The protection device (15,20,40,70) according to claim 1, wherein said magnetic material comprises a magnetic element (30) embedded, i.e. englobed in said barrier portion (22).

3. The protection device (15,20,40,70) according to claim 1, wherein said magnetic material comprises a magnetic element (30) arranged within a respective housing (33) of said barrier portion (22),
in particular said magnetically shielding element (32) is arranged proximate to said magnetic element (30) within said respective housing (33).

4. The protection device (40,70) according to claim 3, comprising a plurality of magnetic elements (30), wherein said magnetically shielding element is a shielding layer (32) arranged to shield a region of said barrier portion (22) wherein said plurality of magnetic elements (30) is arranged,
in particular, said shielding layer (32) forms a closure element of respective open housings (33) of said magnetic elements (30) made in said support structure (41).

5. The protection device (20,40,70) according to claim 1, wherein said barrier portion is a central barrier portion (22), and said support structure (21,41) further has a boundary barrier portion (25) that extends along a boundary part of said central barrier portion (22),
in particular engagement means selected between positive engagement means (24) and non-positive engagement means (27), in particular click coupling means, extends along said boundary barrier portion (25) and is configured for engaging with an edge portion (14) of said mobile electronic apparatus (10,11,12).

6. The protection device (15,16,20,40,70) according to claim 1, wherein said magnetically shielding element (32) is made of a material selected from the group comprised of:
- a diamagnetic material;
- a high-permeability magnetic material, in particular selected among Nickel-Iron-Molybdenum alloys, in particular a Mu-metal alloy, iron, a low-alloy steel;
- a combination thereof.

7. The protection device (15,16,20,40,70) according to claim 1, wherein said support structure (17,18,21,41,71) is made of a material selected from the group consisting of:
- a polymeric material, in particular a thermoplastic material selected from the group consisting of: ABS, a silicone material, a urethane material,
in particular said polymeric material comprises a dispersed phosphorescent material;
- a non-magnetic material, in particular an aluminium alloy.

8. The protection device (16) according to claim 1, wherein said magnetic material is dispersed in said support structure (18).

9. The protection device (16) according to claim 1 or 8, wherein said support structure (18) and said magnetic material (31) comprise magnetic plastic material, in particular, selected between a plastoferrite material and plastoneodymium, or a combination thereof.

10. A method for making a protection device (20,70) comprising:
- a stiff support structure (21,71) made of a polymeric material, comprising:
- a barrier portion (22) that has an inner face (23') and an outer face (23") substantially parallel to each other;
- structure coupling means (24,27) for steadily mounting said support (21,71) on a side to be protected (13) of said mobile electronic apparatus (11,12);
- a magnetic material (30) incorporated in said barrier portion (22), wherein said magnetic material comprises a magnetic element (30) incorporated in a respective housing (33) made in said barrier portion (22),
- a magnetically shielding element (32) arranged opposite to said outer face (23") with respect to said magnetic material (30,31)
said method comprising the steps of:
- prearranging an injection-moulding mould;
- arranging said magnetic element (30) within said mould;
- inserting a quantity di said polymeric material in said mould and injection moulding of said support structure (21,71),
**characterized in that** before said step of arranging said magnetic element (30) a step is provided of arranging a support element in said mould, in particular a clamp support element,
wherein a step is provided selected between:
- prearranging a magnetically shielding element (32) proximate to said magnetic element (30) before said step of inserting a quantity of said polymeric material;
- applying a magnetically shielding element (32) on said inner face (23') of said barrier portion (22).

11. The protection device (16) according to anyone of claims 1 to 9 further comprising a diamagnetic material element (102) positioned between said magnetic material (30,31) and said magnetically shielding element (32).

12. The protection device (16) according to anyone of claims 1 to 9 or 11 wherein said magnetically shielding element (32) is a foil made of a high magnetic permeability selected among a Nickel-Iron-Molybdenum alloy, in particular Mu-metal, iron, a low-alloy steel.

13. The protection device (16) according to anyone of claims 1 to 9 or 11 to 12 wherein said magnetic material (30,31) and said diamagnetic material element (102) have substantially the same contact surface.

14. A kit comprising un protection device (16) according to anyone of claims 1 to 9 or 11 to 13, a magnetically sensible element (101) which can b connected to said magnetic material (30,31) and coupling means (103) apt to connect said magnetically sensible element to a resting surface not sensible to the magnet.

15. The kit according to the previous claim wherein said magnetically sensible element (101) can be connected to said device by means of magnetic and mechanical connection and wherein said coupling means (103) connect said magnetically sensible element to a resting surface not sensible to the magnet.
